Europäisches Patentamt

European Patent Office

Office européen des brevets

(11) Numéro de publication: **0 274 937 B1**

# (12) FASCICULE DE BREVET EUROPEEN

(45) Date de publication de fascicule du brevet: **11.03.92**  (51) Int. Cl.⁵: **G21C 17/10**

(21) Numéro de dépôt: **87402789.9**

(22) Date de dépôt: **08.12.87**

(54) **Colonne d'instrumentation du coeur d'un réacteur nucléaire à eau pressurisée.**

(30) Priorité: **12.12.86 FR 8617419**

(43) Date de publication de la demande:
**20.07.88 Bulletin 88/29**

(45) Mention de la délivrance du brevet:
**11.03.92 Bulletin 92/11**

(84) Etats contractants désignés:
**BE CH DE ES GB IT LI SE**

(56) Documents cités:
**FR-A- 2 573 236**
**US-A- 4 270 979**

**PATENT ABSTRACTS OF JAPAN, vol. 1, no.
71, 11 juillet 1977, page 1199 M 77; & JP-A-52
17 192 (HITACHI SEISAKUSHO K.K.)
02-08-1977**

(73) Titulaire: **ELECTRICITE DE FRANCE Service
National
2, rue Louis Murat
F-75008 Paris(FR)**

(72) Inventeur: **Planchard, Jacques
133, rue Boucicaut
F-92260 Fontenay-aux-Roses(FR)**
Inventeur: **Godon, Jean-Luc
27, rue Hermel
F-75018 Paris(FR)**
Inventeur: **Gorman, Daniel
740 Longdale Road
Ottawa Ontario(CA)**
Inventeur: **Gary, Gérard
25, rue du Fief
F-91530 Saint-Cheron(FR)**

(74) Mandataire: **Mongrédien, André et al
c/o BREVATOME 25, rue de Ponthieu
F-75008 Paris(FR)**

EP 0 274 937 B1

## Description

L'invention concerne une colonne d'instrumentation du coeur d'un réacteur nucléaire à eau pressurisée, cette colonne servant à loger un tube en doigt de gant assurant le guidage d'une sonde de mesure de flux neutronique.

Les réacteurs nucléaires à eau pressurisée sont équipés d'installations permettant de mesurer périodiquement et à distance le flux neutronique en certains points du coeur du réacteur.

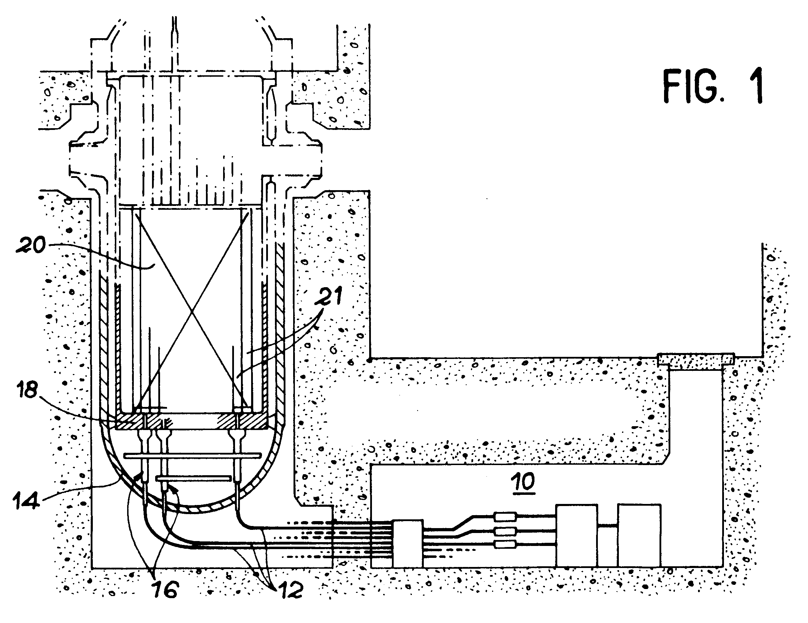

Une telle installation est représentée en coupe et de façon très schématique sur la figure 1. Elle comprend une salle d'instrumentation 10, dans laquelle se trouve le personnel effectuant les manipulations et les mesures. Des tubes de guidage cintrés 12 partant de cette salle 10 débouchent verticalement dans le fond hémisphérique de la cuve de confinement 14 du réacteur.

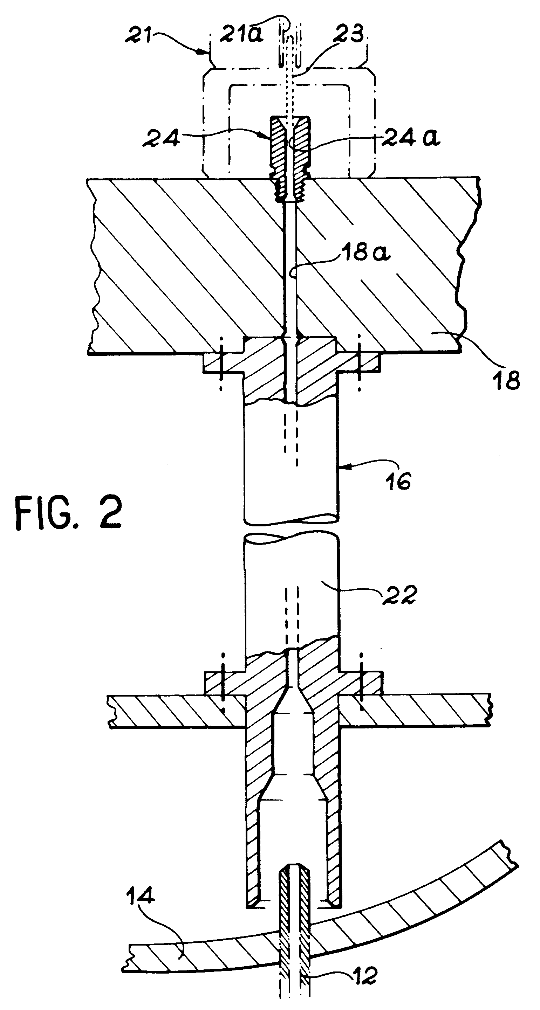

A l'intérieur même de la cuve 14 et dans la partie basse de celle-ci, les tubes 12 sont prolongés vers le haut par des colonnes d'instrumentation verticales 16 qui s'étendent jusqu'à une plaque inférieure horizontale 18 supportant le coeur 20 du réacteur. De façon plus précise, comme l'illustre à plus grande échelle la figure 2, chacune des colonnes d'instrumentation 16 débouche au-dessus de la plaque 18 en vis-à-vis d'un tube guide 21a situé au centre de l'un des assemblages de combustible nucléaire 21 constituant le coeur 20.

Chaque colonne d'instrumentation 16 comprend successivement, de bas en haut, un fourreau de guidage vertical 22 fixé par son extrémité supérieure sur la plaque 18, un trou 18a, de section circulaire et d'axe vertical, formé dans la plaque 18 et une buse 24 également fixée sur la plaque 18 et faisant saillie au-dessus de celle-ci. La buse 24 est percée d'un passage 24a formant restriction, de section circulaire et d'axe vertical.

Dans l'état actuel de la technique (figure 2 et document FR-A-2 573 236), le passage 24a formé dans la buse se termine à son extrémité supérieure par un évasement tronconique, dont l'angle d'ouverture est de 30° ou de 60° selon le type de réacteur concerné.

A l'intérieur de chaque ensemble de guidage constitué par un tube 12, une colonne d'instrumentation 16 et un tube-guide 21 est placé un tube en doigt de gant 23 obturé de façon étanche à son extrémité située à l'intérieur même du coeur. Le tube 23 est un tube en acier inoxydable, de très grande longueur (plusieurs mètres) et de faible diamètre (environ 7,5 mm). Il est donc très flexible. Pour faciliter le renouvellement et la permutation des assemblages combustibles, ce tube en doigt de gant peut être rétracté jusqu'au niveau de la plaque 18. Cette opération est réalisée à partir de la salle d'instrumentation 10.

Lors du fonctionnement du réacteur, les tubes en doigt de gant 23 étant en place dans le coeur 20, une sonde de mesure de flux neutronique constituée par un détecteur à fission miniature est introduite périodiquement par les tubes en doigt de gant jusque dans le coeur du réacteur. Cette opération, ainsi que les mesures qui lui correspondent, sont également réalisées à partir de la salle d'instrumentation 10.

Afin d'assurer un refroidissement aussi uniforme que possible des assemblages constituant le coeur 20 du réacteur, les colonnes d'instrumentation 16 sont également utilisées pour faire circuler de bas en haut jusqu'aux pieds des assemblages 21 l'eau de refroidissement contenue dans la cuve 14. A cet effet, un jeu permettant cette circulation est prévu entre les tubes en doigt de gant et les colonnes 16.

Dans l'état actuel de la technique, l'eau qui s'écoule dans les colonnes d'instrumentation autour des tubes en doigt de gant 23 provoque l'entrée en vibration de ces derniers au niveau de la buse 24. Ces vibrations ont pour conséquence des chocs très violents des tubes contre les buses et les fourreaux de guidage, entraînant leur usure, voir leur rupture, dans des intervalles de temps plus ou moins longs (par exemple une année).

Dans le document US-A-4 270 979, on a envisagé de réduire les vibrations d'un crayon absorbant à l'intérieur d'un tube-guide d'un assemblage combustible en ménageant des canaux axiaux dans une buse formant l'extrémité supérieure de ce tube-guide.

L'invention a précisément pour objet une colonne d'instrumentation comprenant une buse de forme modifiée permettant de supprimer les vibrations des tubes en doigt de gant pour les vitesses d'écoulement de l'eau utilisées dans les réacteurs à eau pressurisée, tout en restant de fabrication simple.

A cet effet et conformément à l'invention, il est proposé une colonne d'instrumentation du coeur d'un réacteur nucléaire à eau pressurisée, servant à loger un tube en doigt de gant assurant le guidage d'une sonde de mesure du flux neutronique, avec un jeu permettant la circulation d'eau de refroidissement du coeur, ladite colonne comprenant successivement, de bas en haut, un fourreau de guidage vertical dont l'extrémité supérieure est fixée sur une plaque inférieure de coeur, un trou vertical formé dans ladite plaque et une buse fixée sur ladite plaque et faisant saillie au-dessus de celle-ci, ladite buse étant percée d'un passage vertical de section circulaire débouchant à son extrémité supérieure sur une face plane horizontale, caractérisée en ce que le passage formé dans la buse présente un diamètre constant sur la majeure partie de sa longueur, jusqu'à ladite face plane horizontale, et en ce que l'extrémité supérieure de la buse comporte des fentes débouchant sur la face plane horizontale et orientées sensiblement radialement par rapport audit passage.

Selon un mode de réalisation préféré de l'invention, ces fentes sont au nombre de quatre et elles sont placées dans deux plans radiaux perpendiculaires entre-eux.

On décrira maintenant, à titre d'exemple non limitatif, deux modes de réalisation de l'invention en se référant aux dessins annexés dans lesquels :

- la figure 1, déjà décrite, est une vue en coupe représentant de façon très schématique l'installation d'instrumentation d'un réacteur nucléaire à eau pressurisée,
- la figure 2, déjà décrite, est une vue en coupe représentant à plus grande échelle une colonne d'instrumentation comportant une buse identique à celles qui sont utilisées actuellement dans les réacteurs à eau pressurisée,
- la figure 3 est une vue en perspective éclatée repésentant un premier mode de réaliation d'une buse réalisée conformément à l'invention, et
- la figure 4 est une vue analogue à la figure 3 illustrant un mode de réalisation préféré de l'invention.

Conformément à l'invention, l'installation d'instrumentation est réalisée pour l'essentiel de la même manière que dans les réacteurs nucléaires à eau pressurisée existants. Les principaux composants d'une telle installation ont été décrits précédemment en se référant à la figure 1.

La colonne d'instrumentation conforme à l'invention présente également une structure générale analogue à celle des colonnes utilisées dans les réacteurs existants. En d'autres termes, elle se compose, de bas en haut, d'un fourreau de guidage vertical 22, d'un trou vertical 18a formé dans la plaque inférieure de coeur 18, et d'une buse 124 fixée sur cette plaque et faisant saillie sur sa face supérieure. La structure générale de cette colonne d'instrumentation est donc comparable à celle qui a été décrite précédemment en se référant à la figure 2.

Cependant, pour remédier au problème de l'entrée en vibration des tubes en doigt de gant sous l'effet de l'écoulement de l'eau de refroidissement du réacteur, conformément à l'invention, on donne une structure modifiée à la buse 124.

Les modifications apportées à la structure de la buse conformément à l'invention s'appuient sur l'observation selon laquelle, dans les réacteurs existants, les vibrations des tubes en doigt de gant sont causées par la turbulence de l'écoulement de l'eau de refroidissement qui se produit dans la région de l'évasement tronconique formé à la partie supérieure du passage traversant la buse.

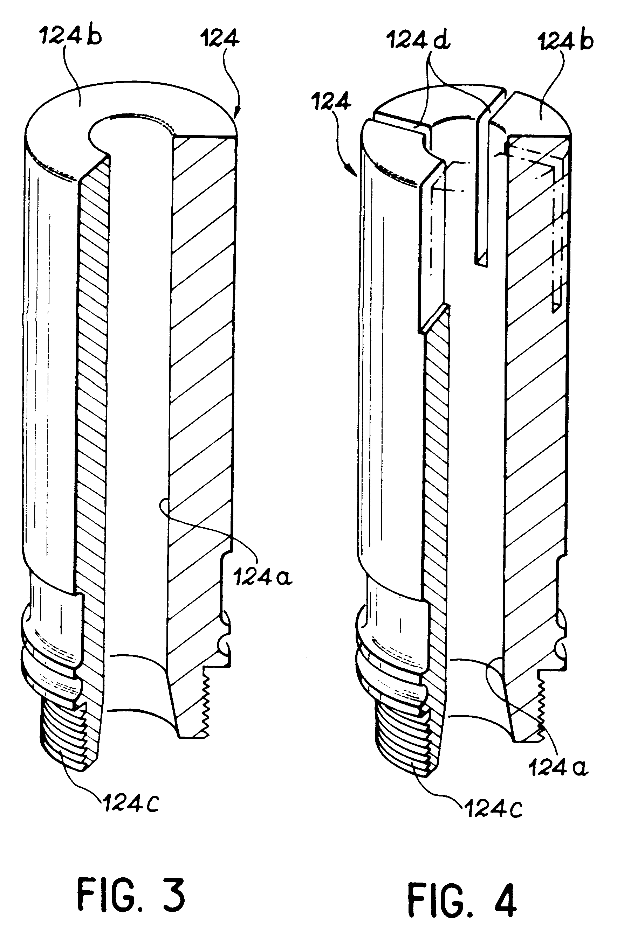

En partant de cette hypothèse et en gardant à l'esprit la nécessité de concevoir des buses de forme aussi simple que possible afin d'en réduire le coût de fabrication, les inventeurs ont conçu et testé un nouveau type de buse dont la structure va maintenant être décrite en se référant à la figure 3.

Comme dans les réacteurs actuels, la buse 124 présente une forme de révolution autour d'un axe orienté verticalement lorsque la buse est fixée sur la plaque inférieure de coeur. Elle est percée selon cet axe d'un passage 124a de section circulaire et présentant un diamètre constant sur la majeure partie de sa longueur. En particulier, la partie de diamètre constant du passage 124a débouche directement sur la face supérieure plane 124b de la buse. En d'autres termes, l'évasement tronconique formé à l'extrémité supérieure du passage dans les buses utilisées actuellement est supprimé.

La buse 124 selon l'invention présente par ailleurs des caractéristiques identiques à celles des buses existantes. En particulier, le passage 124a présente un plus petit diamètre que le trou formé dans la plaque inférieure de coeur supportant la buse et que le passage formé dans le fourreau de guidage prolongeant ce trou vers le bas, de telle sorte que ce passage 124a constitue un étranglement pour l'eau qui circule de bas en haut dans la colonne d'instrumentation.

Les dimensions de la buse restent par ailleurs inchangées, de même que les moyens de fixation de cette buse sur la plaque inférieure de coeur.

Ainsi, la buse présente par exemple une hauteur totale d'environ 100 mm, le diamètre du passage 124a étant d'environ 13mm. Par ailleurs, la buse 124 présente à son extrémité inférieure une partie filetée 124c apte à être vissée dans la plaque inférieure de coeur. Au niveau de cette partie filetée, le passage 124a présente un évasement d'entrée tronconique.

Des essais effectués sur des maquettes en grandeur réelle réalisées conformément à la figure 3 ont montré l'efficacité de la solution proposée. En particulier, grâce à l'emploi de telles buses, aucune vibration notable des tubes en doigt de gant n'a été observée pour les vitesses d'écoulement de l'eau utilisées dans les réacteurs à eau pressurisée.

Dans le mode de réalisation préféré de l'invention illustré sur la figure 4, ce résultat est encore amélioré.

Le mode de réalisation de la figure 4 reprend toutes les caractéristiques qui viennent d'être décrites en se référant à la figure 3. En particulier, le passage 124a traversant la buse 124 présence ici encore un diamètre uniforme sur la majeure partie de sa longueur, et notamment jusqu'à la face supérieure plane 124b sur laquelle il débouche.

Sur la figure 4, l'écoulement de l'eau à la sortie de la buse est amélioré grâce à des fentes 124d débouchant sur la face supérieure 124b de la buse. Ces fentes 124d sont orientées radialement par rapport à l'axe de symétrie vertical de la buse, et elles font communiquer le passage 124a avec la surface extérieure de la buse.

Dans l'exemple de réalisation représenté sur la figure 4, la buse 124 comporte quatre fentes 124d situées dans deux plans perpendiculaires entre eux et passant par l'axe vertical de la buse. Un nombre différent de fentes pourrait cependant être prévu, ces fentes étant alors régulièrement réparties autour de l'axe de symétrie de la buse. Les fentes 124d présentent une profondeur suffisante pour permettre un meilleur écoulement de l'eau à la sortie de la plaque inférieure du coeur. A titre d'exemple, cette profondeur correspond à environ 1/5ème de la longueur totale de la buse, c'est-à-dire qu'elles ont une profondeur d'environ 20 mm dans le cas où la buse a une longueur d'environ 100 mm.

**Revendications**

1. Colonne d'instrumentation du coeur d'un réacteur nucléaire à eau pressurisée, servant à loger un tube en doigt de gant (23) assurant le guidage d'une sonde de mesure de flux neutronique, avec un jeu permettant la circulation d'eau de refroidissement du coeur (20), ladite colonne (16) comprenant successivement, de bas en haut, un fourreau de guidage vertical (22) dont l'extrémité supérieure est fixée sur une plaque inférieure de coeur (18), un trou vertical (18a) formé dans ladite plaque, et une buse (124) fixée sur ladite plaque et faisant saillie au-dessus de celle-ci, ladite buse étant percée d'un passage vertical (124a) de section circulaire débouchant à son extrémité supérieure sur une face plane horizontale (124b), caractérisée en ce que le passage (124a) formé dans la buse présente un diamètre constant sur la majeure partie de sa longueur, jusqu'à ladite face plane horizontale (124b), et en ce que l'extrémité supérieure de la buse comporte des fentes (124d) débouchant sur la face plane horizontale (124b) et orientées sensiblement radialement par rapport audit passage (124a).

2. Colonne d'instrumentation selon la revendication 1, caractérisée en ce que l'extrémité supérieure de la buse comporte quatre fentes (124d) situées dans deux plans radiaux perpendiculaires entre eux.

**Claims**

1. Instrumentation column for the core of a pressurized water nuclear reactor, which serves to house a glove finger tube (23) ensuring the guidance of a neutron flux measuring probe, with a clearance permitting the circulation of cooling water from the core (20), said column (16) successively having from bottom to top a vertical guide sleeve (22), whose upper end is fixed to a lower core plate (18), a vertical hole (18a) formed in said plate and a nozzle (124) fixed to said plate and projecting above the same, said nozzle having a vertical passage (124a) with a circular section and whose upper end issues onto a horizontal planar face (124b), characterized in that the passage (124a) formed in the nozzle has a constant diameter over most of its length and up to said planar horizontal face (124b) and the upper end of the nozzle has slots (124d) issuing onto the planar horizontal face (124b) and oriented substantially radially with respect to said passage (124a).

2. Instrumentation column according to claim 1, characterized in that the upper end of the nozzle has four slots (124d) located in two radial planes which are perpendicular to one another.

**Patentansprüche**

1. Ausrüstungssäule des Kerns eines Druckwasserreaktors, die dazu dient, ein Rohr in Form eines Handschuhfingers (23) aufzunehmen, was die Führung einer Meßsonde des Neutronenflusses sicherstellt mit einem Spiel, das die Zirkulation von Kühlwasser des Kerns (20) erlaubt, wobei die Säule (16) aufeinanderfolgend von unten nach oben ein Futteral zur vertikalen Führung (22), dessen oberes Ende an einer unteren Platte des Kerns (18) befestigt ist, ein vertikales Loch (18a), das in der Platte ausgebildet ist, und eine Düse (124) aufweist, die auf der Platte befestigt ist und über diese vorspringt, wobei die Düse mit einem vertikalen Kanal (124a) von kreisförmigem Querschnitt durchsetzt ist, der an seinem oberen Ende auf einer horizontalen ebenen Fläche (124b) mündet, dadurch gekennzeichnet, daß der Kanal (124a), der in der Düse ausgebildet ist, einen konstanten Durchmesser auf seinem überwiegenden Bereich seiner Länge bis zur horizontalen ebenen Seite (124b) aufweist, und daß das obere Ende der Düse Einkerbungen (124d) aufweist, die auf der horizontalen ebenen Seite (124b) münden, und im wesentlichen radial bezüglich des Kanals (124a) ausgerichtet sind.

2. Ausrüstungssäule nach Anspruch 1, dadurch gekennzeichnet, daß das obere Ende der Düse vier Einkerbungen (124d) aufweist, die in zwei radialen senkrecht zueinander verlaufenden Ebenen angeordnet sind.

FIG. 1

EP 0 274 937 B1

FIG. 2

FIG. 3

FIG. 4